Europäisches Patentamt

European Patent Office

Office européen des brevets

(11) Numéro de publication: **0 159 261**
**A1**

(12) **DEMANDE DE BREVET EUROPEEN**

(21) Numéro de dépôt: **85400640.0**

(22) Date de dépôt: **01.04.85**

(51) Int. Cl.⁴: **G 01 S 7/02**

(30) Priorité: **30.03.84 FR 8405038**

(43) Date de publication de la demande:
**23.10.85 Bulletin 85/43**

(84) Etats contractants désignés:
**DE GB IT NL SE**

(71) Demandeur: **THOMSON-CSF**
**173, Boulevard Haussmann**
**F-75379 Paris Cedex 08(FR)**

(72) Inventeur: **Guerin, Claude**
**THOMSON-CSF SCPI 173, bld Haussmann**
**F-75379 Paris Cedex 08(FR)**

(74) Mandataire: **Benoit, Monique et al,**
**THOMSON-CSF SCPI 173, Bld Haussmann**
**F-75379 Paris Cedex 08(FR)**

(54) Dispositif de datation d'informations radar, et radar comportant un tel dispositif.

(57) La présente invention concerne un dispositif de datation d'informations radar relié à l'antenne (3) du radar et à la sortie de la chaîne de réception (1) qui délivre les coordonnées des cibles détectées, ce dispositif comportant des moyens d'acquisition de la direction de pointage de l'antenne (3) donnant un azimut $\theta_1$, une mémoire (4), une horloge (5); l'heure à laquelle est acquit l'azimut $\theta_1$ étant inscrite dans la mémoire à l'adresse $\theta_1$, un calculateur reçoit du radar après traitement, l'azimut $\theta_1$ et va lire dans la mémoire l'heure à cette adresse pour la transmettre au centre multiradar.

Application aux centres multiradar.

FIG_1

EP 0 159 261 A1

## DISPOSITIF DE DATATION D'INFORMATIONS RADAR ET RADAR COMPORTANT UN TEL DISPOSITIF.

La présente invention concerne les dispositifs de datation d'informations radar et les radars comportant un tel dispositif, ces dispositifs étant conçus pour permettre à un centre multiradar d'exploiter des informations reçues en même temps par les différents radars.

Les centres multiradar du type centre de surveillance aérienne, reçoivent des informations que l'on appelle des plots. Ces plots sont définis par des coordonnées qui sont les coordonnées des cibles détectées par les différents radars, chaque radar effectuant pour cela un traitement en temps réel des différents signaux reçus. Afin d'exploiter les informations provenant de chaque radar pour établir des pistes d'avion (par exemple) il est nécessaire d'effectuer une corrélation entre les informations issues des différents radars. Il est par conséquent important de connaître l'instant auquel les informations arrivent soit en début de chaîne de réception, soit en fin de chaîne.

On entend par chaîne de réception, le récepteur lui-même et le calculateur qui lui est associé et qui traite les signaux de réception pour sortir des informations de plots sous forme de coordonnées cartésiennes (X, Y) ou polaires ($\rho$, $\theta$).

Les dispositifs de datation existant permettent de déduire l'heure de détection d'un plot en retranchant, à l'heure de réception par le centre d'exploitation, le temps passé pour le traitement des informations. Le temps passé sur chaque plot est déterminé par différence entre le moment d'arrivée et le moment de sortie dans chaque organe de traitement. La vitesse de rotation de l'antenne étant connue par ailleurs, les plots peuvent être aussi datés à partir d'un signal de référence correspondant à une position déterminée de l'antenne par exemple le nord. Le moment de passage de l'antenne dans cette position doit être déterminée par différence entre l'heure de réception du message de référence par le centre d'exploitation, et le temps passé pour le traitement.

Il est bien évident que pour déduire l'information de temps à partir de la vitesse de rotation de l'antenne, c'est que l'on suppose cette vitesse constante ce qui n'est pas toujours le cas. Par ailleurs, pour ne pas avoir à alourdir le dispositif de traitement des informations et par conséquent à modifier les radars, il est nécessaire que le dispositif de datation soit prévu dès la conception de ces radars, ce qui n'est pas toujours le cas non plus.

La présente invention a pour but de remédier à ces inconvénients et propose un dispositif de datation se plaçant à la sortie de la chaîne de réception radar sans aucune modification du matériel ou du logiciel existant.

La présente invention a donc pour objet un dispositif de datation collaborant avec le récepteur d'un radar et son dispositif de traitement d'informations qui délivre les coordonnées des cibles détectées, chaque direction de pointage de l'antenne donnant un azimut ; principalement caractérisé en ce que le dispositif comporte :

- des moyens d'acquisition en temps réel de la direction $Q_i$ de pointage de l'antenne du radar, ces moyens étant directement reliés à l'antenne donnant ainsi l'azimut des cibles détectées ;

- des moyens de mesure horaire délivrant l'heure à laquelle chaque direction de pointage est acquise ;

- des moyens de mémorisation permettant d'écrire aux adresses données par les différentes positions $Q_i$, l'heure d'acquisition de la direction $Q_i$ correspondante ;

- des moyens pour recevoir du radar les coordonnées des cibles et lisant dans la mémoire pour chaque coordonnée relative à une direction $Q_i$ de pointage donnée, l'heure inscrite à cette adresse et délivrant les coordonnées de chaque cible avec l'heure à laquelle elles ont été détectées.

D'autres particularités et avantages de l'invention apparaîtront clairement à la lecture de la description suivante présentée à titre d'exemple non limitatif et faite en regard des figures du dessin annexé sur lequel :

- la figure 1 représente le schéma général d' un dispositif de datation d'informations radar pour centre multiradar selon l'invention ;

- la figure 2 représente un exemple de réalisation du dispositif selon la figure 1.

La description qui suit est relative à un dispositif de datation destiné à équiper un radar collaborant avec un centre d'exploitation multiradar, non représenté, effectuant par exemple de la surveillance aérienne. Il est évident qu'un tel dispositif doit équiper chaque radar relié au centre. Le centre reçoit les informations transmises par chaque ensemble formé par le radar et son dispositif de datation afin de les exploiter pour établir à partir de la datation une corrélation entre les informations des différents radars.

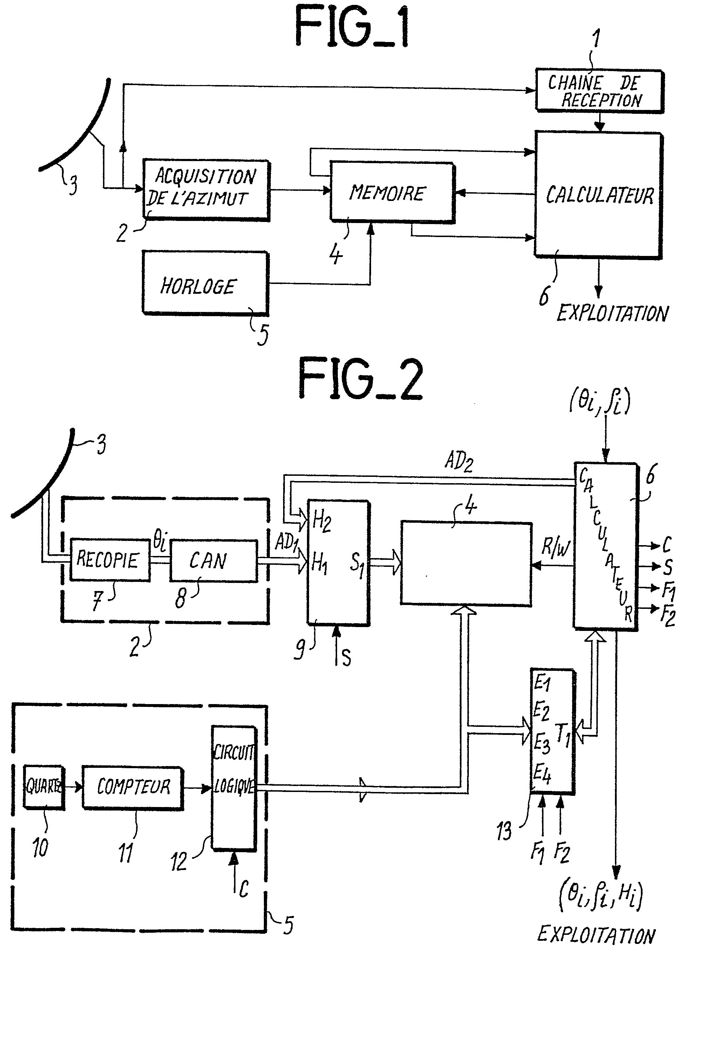

La figure 1 représente le schéma général d'un dispositif de datation selon l'invention.

Ce dispositif est placé à la fin de la chaîne de réception radar quel que soit son type.

La chaîne de réception comprend de manière connue en soi le récepteur et un organe de traitement de l'information que l'on a représenté par un seul bloc référencé 1.

Ce dispositif est directement lié au mécanisme de recopie de la position de l'antenne 3 appartenant au radar. Le dispositif peut ainsi connaître la direction de pointage de l'antenne, cette direction donnant l'azimut de l'antenne. Il est donc relié à l'antenne par des moyens d'acquisition de l'azimut 2.

Les différentes positions de pointage de l'antenne sont numérisées et permettent d'adresser une mémoire 4 dans laquelle on inscrit aux adresses correspondantes l'heure pendant laquelle l'antenne est passée par ces positions. L'information de datation ainsi mémorisée est obtenue à partir d'une horloge 5 connue en soi.

Un circuit de commande 6 est apte à émettre des signaux de commande aux différents circuits et notamment à piloter les phases d'écriture et de lecture de la mémoire 4. Dans notre réalisation, le circuit de commande 6 est réalisé par un calculateur de la chaîne de réception. Ce calculateur reçoit par ailleurs l'azimut mesuré des plots radar, c'est-à-dire les coordonnées des cibles détectées provenant de la chaîne de réception 1. Ces coordonnées peuvent être des coordonnées polaires faisant donc apparaître une distance $\rho_i$ d'une cible et son azimut $\theta_i$ ou des coordonnées cartésiennes faisant apparaître une abscisse $X_i$ et une ordonnée $Y_i$ dans un repère déterminé tel que :

$$\rho_i = \sqrt{X_i^2 + Y_i^2} \quad \text{et}$$

$$\theta_i = \arg(X_i, Y_i)$$

Le calculateur permet de dater chaque azimut mesuré par lecture de la mémoire à l'adresse correspondante à l'azimut où est stockée l'heure donnée par des moyens de datation 5. Ainsi le calculateur délivre les informations de plots avec l'information horaire stockée dans la mémoire.

Sur la figure 2, on a représenté une réalisation particulière du dispositif de datation selon l'invention.

Par un mécanisme 7 classique de recopie de la position de l'antenne 3, on obtient la mesure du pointage de l'antenne ce qui permet de connaître sous forme de signal analogique, l'azimut $\theta_i$ .Ce signal analogique est numérisé au moyen d'un système de conversion analogique-numérique 8 et se présente donc sous forme de mots binaires de $\underline{n}$ éléments binaires (n bits).

Un multiplexeur amplificateur 9 est relié par une première entrée $H_1$ aux sorties du convertisseur 8 et par une deuxième entrée H2 au calculateur 6. Les deux liaisons sont réalisées respectivement par un bus AD1 et AD2 . La sortie du multiplexeur est reliée aux entrées d'adressage de la mémoire 4. Pendant un ordre d'écriture W envoyé par le calculateur à la mémoire 4, un ordre de sélection S est également envoyé par le calculateur 6 au multiplexeur 9. L'état du signal S permet de sélectionner à la sortie S1 les données arrivant à l'entrée H1. Pendant un ordre de lecture R de la mémoire, ce sont les données arrivant à l'entrée H2 du multiplexeur 9 qui sont sélectionnées à la sortie S1. Le multiplexeur permet de lire le contenu de la mémoire au moyen du bus d'adresse AD2.

L'heure est déterminée à partir d'un quartz 10 d'une bonne stabilité (sa dérive étant de l'ordre de $10^{-5}$) et d'un compteur numérique 11 donnant l'heure en heure sur $\underline{p}$ bits, minutes sur $\underline{p}$ bits, secondes sur $\underline{p}$ bits, 1/10 de secondes sur $\frac{P}{2}$ bits et 1/100 de secondes sur $\frac{P}{2}$ bits.

Un circuit logique trois états 12 est relié à la sortie du compteur 11 et aux entrées de données de la mémoire 4. Ce circuit 12 est commandé par le calculateur 6. Le calculateur lui envoie un signal C autorisant ou non l'inscription des données dans la mémoire. En effet, comme l'horloge fonctionne en permanence, pour protéger les données inscrites dans la mémoire, le circuit est mis par le signal C à l'état haute impédance.

Un multiplexeur amplificateur 13 permet lors d'un ordre de lecture R du contenu de la mémoire 4 à une adresse donnée, d'envoyer au calculateur 6 la donnée lue.

En fonction de l'état des signaux de sélection F1 et F2 qu'envoie le calculateur 6, le multiplexeur 13 délivre à la sortie T1 successivement la donnée arrivant à l'entrée E1, puis E2, puis E3, puis E4 de manière à obtenir par exemple les $\underline{p}$ bits de codage de l'heure, puis les $\underline{p}$ bits de codage des minutes, puis les $\underline{p}$ bits de codage des secondes puis les $\frac{P}{2}$ bits de codage des 1/10 de secondes avec les $\frac{P}{2}$ bits de codage des 1/100 de secondes. Il est également possible de ne lire que le $\frac{P}{2}$ bits de codage des 1/10 et 1/100 de seconde en ne sélectionnant que les deux entrées sur lesquelles arrivent ces données.

Le calculateur 6 peut ainsi pour chaque information ($Q_i$ $\rho_i$) lire dans la mémoire à l'adresse $Q_i$ la donnée $H_i$ et envoyer au centre multiradar l'information ($Q_i$, $\rho_i$, $H_i$).

Le centre d'exploitation dispose d'une heure de référence. Il

reçoit des différents dispositifs de datation les coordonnées des plots avec les informations horaires $H_i$, $H_j$, $H_k$ pour un exemple de trois dispositifs indépendants. Si l'heure est H au moment où le centre reçoit les informations $H_i$, $H_j$, $H_k$ le centre pourra établir une corrélation entre ces informations en effectuant les différences $H - H_i$, $H - H_j$ et $H - H_k$. Auparavant, pour corriger l'écart horaire entre les différents dispositifs de datation et le centre d'exploitation, il suffit que chaque dispositif lise directement dans la mémoire l'heure d'arrivée $H_{io}$, $H_{jo}$, $H_{ko}$ d'un signal de référence (par exemple l'azimut $\theta_o$ correspondant à l'indication du nord) et l'envoie au centre.

En conclusion, le dispositif de datation tel qu'il a été décrit permet, sans aucune modification des chaînes de réception radar et sans nécessité de synchronisation entre ces chaînes, de dater les informations transmises au centre d'exploitation qui est apte en se recalant par rapport à une horloge interne à effectuer une corrélation entre les différentes informations.

REVENDICATIONS

1. Dispositif de datation d'informations radar collaborant avec une chaîne de réception radar (1) comportant le récepteur lui-même et son dispositif de traitement d'informations qui délivre les coordonnées des cibles détectées, chaque direction de pointage de l'antenne donnant un azimut, caractérisé en ce que le dispositif comporte :

- des moyens d'acquisition (2) en temps réel de la direction $Q_i$ de pointage de l'antenne (3) du radar (1) ces moyens étant directement reliés à l'antenne donnant ainsi l'azimut des cibles détectées ;

- des moyens de mesure horaire (5) délivrant l'heure à laquelle chaque direction de pointage est acquise ;

- des moyens de mémorisation (9, 4, 13) permettant d'écrire aux adresses données par les différentes positions $Q_i$ l'heure d'acquisition de la direction $Q_i$ correspondante ;

- des moyens de commande recevant du radar les coordonnées des cibles et lisant dans la mémoire pour chaque coordonnée relative à une direction $Q_i$ de pointage donnée, l'heure inscrite à cette adresse et délivrant les coordonnées de chaque cible avec l'heure à laquelle elles ont été détectées.

2. Dispositif selon la revendication 1, caractérisé en ce qu'il est connecté à la sortie de la chaîne de réception (1) et est relié à l'antenne (3) du radar.

3. Dispositif de datation selon la revendication 1 ou 2, caractérisé en ce que les moyens de mémorisation comportent un premier multiplexeur (9) d'adressage dont une entrée (H1) est reliée à la sortie des moyens d'acquisition (2) par un bus (AD1) et dont une entrée est reliée par un bus d'adresse (AD2) au calculateur (6) ; une mémoire (4) à lecture et écriture dont les entrées d'adressage sont reliées à la sortie (S1) du multiplexeur (9) ; un deuxième multiplexeur (13) dont les entrées (E1- E4) sont reliées aux entrées de données de la mémoire (4) et dont la sortie (T1) est reliée au calculateur (6).

0159261

4. Dispositif selon l'une quelconque des revendications 1 à 3, caractérisé en ce que les moyens de mesure horaire (5) comportent un quartz (10), un compteur numérique (11) apte à délivrer l'information horaire sous forme d'heure, de minute, de seconde de dixième et de centième de secondes.

5. Dispositif selon la revendication 4, caractérisé en ce que les moyens de mesure horaire (5) comportent en outre un circuit logique trois états (12) commandé par le calculateur (6) permettant d'envoyer ou non les informations horaire à inscrire dans la mémoire (4).

6. Radar, caractérisé en ce qu'il comporte un dispositif selon la revendication 1.

1/1
# FIG_1

# FIG_2

Office européen
des brevets

**RAPPORT DE RECHERCHE EUROPEENNE**

EP 85 40 0640

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl.4) |
|---|---|---|---|
| X | US-A-4 425 617 (D.L. SHERWOOD) * Colonne 2, ligne 51 - colonne 3, ligne 58, figures 1,2a,2b * | 1,2 | G 01 S 7/02 |
| A | ELECTRICAL COMMUNICATION, vol. 38, no. 4, 1963, pages 501-510, New York, US; K. JEKELIUS: "Transradar - A narrow-band radar relay equipment using storage capacitors" * Page 501, figure 1 * | 1,2 | |
| A | NAVY TECHNICAL DISCLOSURE BULLETIN, vol. 4, no. 10, octobre 1979, pages 15-18, Washington, US; E.C. LEWIS: "Multi-radar target correlation and tracker" * Page 15, figure * | 1,2 | |
| | | | DOMAINES TECHNIQUES RECHERCHES (Int. Cl.4) |
| A | US-A-4 348 693 (J.D. CAULDWELL) * Colonne 7, ligne 8 - colonne 8, ligne 19; figure 6 * | 3 | G 01 S |

Le présent rapport de recherche a été établi pour toutes les revendications

| Lieu de la recherche | Date d'achevement de la recherche | Examinateur |
|---|---|---|
| LA HAYE | 27-06-1985 | MARCHAU M.F. |

CATEGORIE DES DOCUMENTS CITES

X : particulièrement pertinent a lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82